# EUROPÄISCHE PATENTANMELDUNG

(11) **EP 1 667 021 A1**
(43) Veröffentlichungstag der Anmeldung: **07.06.2006**
(21) Anmeldenummer: 04028717.9
(22) Anmeldetag: 03.12.2004
(51) Int. Cl.: G06F 11/14, H04Q 7/32

(54) **Datensicherungsverfahren für ein Kommunikationsgerät**

(71) Anmelder: Woldeab, Jerry Muse, 22301 Hamburg (DE); Tautges, Ingo, 20148 Hamburg (DE); Swinke, Jürgen, 21357 Bardowick (DE)
(72) Erfinder: Woldeab, Jerry Muse, 22301 Hamburg (DE); Tautges, Ingo, 20148 Hamburg (DE); Swinke, Jürgen, 21357 Bardowick (DE); Swinke, Tillman, 67549 Worms (DE); Florl, Thilo, 76275 Ettlingen (DE)
(74) Vertreter: Harmann, Bernd-Günther

(57) **Zusammenfassung**

Zur Sicherung von nutzerspezifischen Kommunikationsdaten auf einem, insbesondere mobilen Kommunikationsgerät wird ein Datensicherungsverfahren mit wenigstens den Schritten Etablieren einer Kommunikationsverbindung zwischen Kommunikationsgerät (1a) und einer zentralen Speichereinheit (4), Übertragen nutzerspezifischer Kommunikationsdaten (8) in einem Geräteformat vom Kommunikationsgerät (1a) zur zentralen Speichereinheit (4), Abspeichern der Kommunikationsdaten (8) in der zentralen Speichereinheit (4) verwendet.

Beim Übertragen der Kommunikationsdaten (8) werden technische Informationen (5) zur Identifikation einer Konfiguration des Kommunikationsgerätes (1a) übermittelt, so dass beim Abspeichern der Kommunikationsdaten (8) ein für die technischen Parameter (5) spezifisches Konvertieren der Kommunikationsdaten (8) aus dem Geräteformat in ein zentrales Speicherformat erfolgen kann.

## Beschreibung

Die Erfindung betrifft ein Datensicherungsverfahren für ein Kommunikationsgerät nach dem Oberbegriff des Anspruchs 1, ein Datenübertragungsverfahren von einem Kommunikationsgerät an eine zentrale Speichereinheit nach dem Oberbegriff des Anspruchs 13, ein Datenhaltungsverfahren für eine zentrale Speichereinheit nach dem Oberbegriff des Anspruchs 16, ein Computerprogrammprodukt und ein Datenstrukturprodukt.

Gegenwärtig besteht für viele Endnutzergeräte die Problematik des Verlusts des Geräts oder der gespeicherten Daten, z.B. durch Diebstahl der gesamten Kommunikationseinheit oder durch einen Ausfall des datenhaltenden Systems. Deshalb werden persönliche Daten gelegentlich von einem vernetzten, insbesondere mobilen, Endnutzergerät gesichert, beziehungsweise übertragen, indem der Benutzer manuell eine private und isolierte Datensicherung durchführt. Beispiele hierfür stellen Rechner in lokalen Kommunikationsnetzen (LAN/WLAN) oder Mobiltelephone aber auch Telephonanlagen ohne eigene ausfallresistente Speicherkapazität dar.

Weiterhin ist eine Sicherung der persönlichen Daten eines Endnutzergerätes meistens den Benutzer der Geräte der etablierter Hersteller vorbehalten, da nur diese eine entsprechende Software oder Backup-Möglichkeiten zur Verfügung stellen. Kleinere Hersteller oder Geräteserien haben keine Möglichkeit der Sicherung.

Die manuell gesteuerte Datensicherung erfordert zumeist eine entsprechenden Software, einen Personal-Computer und eine Datenverbindung, zumeist ein Datenkabel, ein Infrarot-Anschluss oder auch ein Bluetooth-Adapter, sofern das Endnutzergerät darüber verfügt. Auch muss der Nutzer über die Administratorrechte auf dem Computersystem verfügen, was in den meisten Firmen aus administrativen oder Sicherheitsgründen nicht ohne Probleme zu realisieren ist. Hieraus folgt meist das notwendige Erfordernis eines eigenen Rechners, verbunden mit dem spezifischen Anwenderwissen. Selbst bei Vorliegen aller Voraussetzungen muss eine Verbindung zwischen dem Endnutzergerät und dem Computer hergestellt werden und es ist die benötigte Software zu starten.

Die benötigte Software steht gegenwärtig fast ausschließlich Nutzern des am weitesten verbreiteten Betriebssystems Microsoft Windows zur Verfügung. Software-Versionen für andere Systeme, wie z.B. Apple Macintosh, sind hingegen nur selten verfügbar. Freie Systeme wie zum Beispiel Linux (Suse, Debian, RedHat, FreeBSD) und Unix (Solaris) werden zumeist gar nicht unterstützt. Somit sind Benutzer dieser Systeme völlig von dieser Form der Datensicherung ausgeschlossen.

Ist eine Kommunikationsverbindung hergestellt, können die persönlichen Daten über die hergestellte Verbindung auf das lokale System übertragen und dort gespeichert werden. Dort können sie jedoch durch eigenes unbeabsichtigtes Verschulden, durch höhere Gewalt oder durch Zufälle zerstört werden. Diese Daten sind ohne Form von Zweitsicherung verloren. Grundsätzlich können redundante Speichersysteme, wie z.B. RAID-Systeme installiert werden, was jedoch enorme Kosten und erhöhten technischen Aufwand bzw. grössere Komplexität verursachen würde. Somit stehen solche Lösungen für den normalen Anwender nicht als üblicherweise verfügbare Alternative zur Verfügung.

Auch sind diese Daten zum einen herstellerspezifisch, das bedeutet, wenn ein Gerät eines anderen Herstellers verwendet wird, sind diese Daten ohne Konversion nicht direkt verwendbar und damit aufgrund der geschilderten Problematik faktisch wertlos. Zum anderen sind diese Daten softwarespezifisch, das heißt, selbst für ein neues Gerät des gleichen Herstellers können Probleme entstehen, da sich unter Umständen die Daten trotzdem nicht auf das neue Gerät übertragen lassen.

Zur Datenübertragung stehen heute verschiedene Systeme zur Verfügung.

Zum einen existieren feste oder zeitweilig realisierbare physische Verbindungen, d.h. über ein Kabel, oder eine Gerätehalterung. Beispiele hierfür wären ein Netzwerkkabel, ein Telephon oder ein Druckeranschluss. Des weiteren können optische Verbindungen, wie zum Beispiel Infrarot oder Glasfaserkabel, oder Funkverbindungen, wie zum Beispiel W-LAN, Bluetooth oder GSM und UMTS, genutzt werden.

Für die verschiedenen Übertragungsarten kommen spezifische Übertragungsprotokolle zur Anwendung. Mögliche Protokolle sind zum Beispiel TCP/IP, IPX oder 802.11b, 802.3. Über jede dieser Übertragung ist es möglich, verlustfrei Daten zu übertragen.

Im folgenden werden rein exemplarisch zumeist Funkübertragungsmöglichkeiten erläutert, ohne hierdurch eine technische oder funktionelle Einschränkung begründen zu wollen. Beispiele für solche Kommunikationsverbindungen sind insbesondere GSM oder UMTS.

Die Datenverwaltung ist meistens an das gegebene Dateisystem des jeweiligen Betriebssystems des Kommunikationsgerätes gekoppelt. Viele Nutzer nutzen jedoch nicht die theoretisch zur Verfügung stehende Funktionalität des Systems, da dies eine entsprechende Kenntnis und Erfahrung in der Datenverwaltung voraussetzt. Zur Versionenverwaltung gibt es zwar verschiedene Ansätze, wie zum Beispiel CVS oder Web-DAV. Da die meisten Nutzer jedoch nicht als ausgewiesene Fachleute zu betrachten sind, sind Ihnen diese Systeme nicht vertraut, so dass faktisch zumeist keine Versionenverwaltung betrieben wird. Eine namentliche Bezeichnung von Dateien wäre denkbar, jedoch verzichten die meisten Nutzer darauf.

Die Aufgabe der vorliegenden Erfindung besteht in Bereitstellung eines Verfahrens zur Datensicherung bzw. Wiederherstellung von nutzerspezifischen Kommunikationsdaten auf einem Endnutzergerät, wobei die Datensicherung unabhängig vom Standpunkt, Hersteller, Gerätetyp und Software erfolgt.

Eine weitere Aufgabe besteht in der Ermöglichung der Datenkonversion zur Nutzung auf verschiedenen oder anderen Kommunikationsgeräten oder -gerätetypen.

Diese Aufgaben werden erfindungsgemäss durch die Verfahren oder Gegenstände der Ansprüche 1, 13 bzw. 16 sowie durch die kennzeichnenden Merkmale der Unteransprüche gelöst bzw. die Lösungen fortgebildet.

Die Erfindung betrifft ein Datensicherungsverfahren für ein Kommunikationsgerät, ein Datenübertragungsverfahren von einem Kommunikationsgerät an eine zentrale Speichereinheit, ein Datenhaltungsverfahren für eine zentrale Speichereinheit, ein Computerprogrammprodukt und ein Datenstrukturprodukt.

Die Verfahren basieren auf der Übertragung von nutzerspezifischen Daten von einem lokalen, insbesondere mobilen Endnutzergerät auf einen zentralen Speicherort, an dem eine Konversion in ein Speicherformat und eine Datenhaltung erfolgt.

Dabei werden durch den Nutzer Übertragungs- und Speicherparameter vorgegeben. Insbesondere legt er fest, wann oder wo die Datensicherung erfolgt. Dies kann beispielsweise durch eine manuelle, zeit- oder ereignisgesteuerte Auslösung erfolgen. Der Nutzer erstellt diese Datensicherungskonfiguration durch die ihm zur Verfügung stehende Software, die auf seinem Endnutzergerät abläuft, lokal bzw. mobil in Auftrag. Das Endnutzergerät sendet den Auftrag zur Datensicherung über eine ihm zur Verfügung stehende Verbindung, beispielsweise GSM, GPRS oder UMTS, zu einem Dienstleister, der die zentrale Konversions- und Speichereinheit betreibt. Der Dienstleister nimmt die Verbindung des Endnutzergerätes an und stellt Speicherplatz zur Verfügung. Nun übermittelt das Endgerät technische Informationen über die Hard- und Software, d.h. insbesondere, welcher Herstellertyp und welche Softwareversion es betreibt. Der Nutzer hat nun die Möglichkeit auszuwählen, welche Daten er mit welchen Einstellungen sichern möchte. Daraufhin sendet das Endnutzergerät die ausgewählten Daten an den Dienstleister über ein der Verbindung entsprechendes Protokoll. Der Dienstleister empfängt die Daten und konvertiert diese Daten in ein mILC-Format (mobile Intermediate Language Code). Das mILC-Format hat den Zweck, die Daten unabhängig von Herstellern, Geräte und Software-Versionen, abzulegen. Dem zuvor empfangenen Software- und Herstellerversion entsprechend vergleicht der Konverter die ankommenden Daten mit einer ihm zur Verfügung stehenden Liste bzw. Datenbank und wandelt die einzelnen Datenabschnitte und Einzeldateien in das mILC-Format um. Die umgewandelten Daten werden dann zentral auf einem Server abgelegt, zum Beispiel in einem Datenbanksystem. Zusätzlich zu den Daten des Nutzers werden eine Kunden-Nummer und ein generiertes Passwort abgelegt und dem Kunden übermittelt, beispielsweise per SMS, so dass dieser jederzeit die Möglichkeit hat, auf seine Daten zuzugreifen, diese zu modifizieren oder wieder herzustellen.

Der Nutzer entscheidet, wann er eine Wiederherstellung der Daten einleiten möchte. Dies kann er direkt von seinem lokalen bzw. mobilen Gerät aus tun, wobei verschiedene Verbindungen genutzt werden können. Dabei können auch wechselnde oder alternative Informationskanäle, beispielsweise das Internet, verwendet werden.

Hierfür sendet er einen Auftrag zur Datenwiederherstellung an den Dienstleister. Der Dienstleister nimmt den Auftrag entgegen und stellt eine Verbindung über den vom Auftraggeber gewünschten Informationskanal her. Nun wird der Nutzer aufgefordert, seine Kundennummer und sein Passwort zu übermitteln. Sollte der Auftrag nicht von dem lokalen bzw. mobilen Gerät selbst, also z.B. über alternative Kanäle, oder einem anderen Kommunikationsgerät ausgehen, so muss er zusätzlich eine weitere Information angeben, z.B. die Telephonnummer, unter der die Sicherung vollzogen wurde. Dies geschieht um Missbrauch der abgelegten Daten zu verhindern. Sind alle Daten korrekt angegeben worden, so schaltet das angegebene Kommunikationsgerät auf Empfang. Zusätzlich wird das empfangende Gerät bezüglich des Herstellers, Gerätetyps und der verwendeten Softwareversion abgefragt. Der Dienstleister ruft nun alle Daten unter der aktuellen Kundennummer ab und wandelt sie anhand des mILC-Konverters in das Format um, das von dem angegebenen Gerätetyp unterstützt wird. Anschließend werden die Daten an das Gerät übertragen.

Die Daten müssen bei der Übermittlung von dem Gerät gelesen und auf das Gerät geschrieben werden. Dies ist auf zweierlei Art möglich.

Zum ersten entscheidet sich der Nutzer zum Einsatz der Software und wählt die für seinen Gerätetyp passende Software aus. Daraufhin kann er Software über verschiedene Informationskanäle (Internet, http, GSM, GPRS ...) herunterladen. Diese Software basiert auf einer gemeinsamen Software-Basis (z.B. Java, Palm-OS, Windows CE ...). Diese Software wird gestartet und ist somit einsatzbereit. Alle Einstellungen sind im Vorhinein getroffen worden oder können selbst verändert werden.

Im zweiten Fall ist die einzusetzende Software im Vorhinein vom Hersteller des Gerätes in dem Gerät integriert worden, zum Beispiel direkt in die Menü-Struktur. Hier ist die Softwarebasis die Software des Kommunikationsgeräte-Herstellers.

Der Konverter arbeitet vorteilhafterweise als Batch-Prozess, das heißt, dass er vollständig automatisch abläuft, ohne eine notwendige Steuerung von außen. Dabei liest er einen Datenstrom und vergleicht die ankommenden Daten mit Daten, über die er in einer Tabelle oder einer anderen Datenbasis verfügt. Jeder Gerätetyp oder jede Software-Version verwendet ihre eigenen Tags und Kennzeichnungen. Diese Kennzeichnungen und Tags sind in die Tabelle eingetragen, die dem Konverter zur Verfügung steht. Im Rahmen einer Datenübertragung von einem Kommunikationsgerät an den Konverter identifiziert der Konverter zunächst das Gerät, den Hersteller des Geräts den Gerätetyp und die genutzte Software.

Danach entscheidet der Konverter welchen Tabellenabschnitt er benötigt. Nachfolgend liest er den Datenstrom des mobilen Gerätes Stück für Stück aus, und vergleicht die Stücke mit den Tags und Kennzeichnungen in seiner Tabelle, so dass die Daten identifiziert und mit einer zugehörigen mILC-Kennzeichnung abgelegt werden können.

Bei der Wiederherstellung wird der Prozess invertiert, d.h. der Ablauf erfolgt in entgegengesetzter Richtung. Der Konverter liest die abgelegten Daten aus und identifiziert das Kommunikationsgerät, auf das die Daten übertragen werden sollen. Dementsprechend entscheidet er, in welche Kennzeichnungen die mILC-Kennzeichnungen umgewandelt werden müssen. Danach werden diese wiederum übertragen.

Da dieses Prinzip auf einer Tabelle fußt, ist es problemlos möglich, einzelne Hersteller, Gerätetypen oder Software-Versionen dynamisch zu ergänzen.

Das Verfahren arbeitet mit einem zentralen Format, wobei dieses in alle vorstellbaren Systeme konvertierbar ist. Somit sind auch der Informationsverbreitung keine Grenzen gesetzt, da die Informationen auf diese Weise grundsätzlich allen Informationssystemen zugänglich sind. Sollen die Daten über das Internet einsehbar sein, so müssen die Daten nur aus der Datenbank abgerufen und in HTML-Tags umgewandelt werden. So können die gesicherten Daten zum Beispiel im Internet auf Wunsch editiert werden, oder für eine Groupware zum Download angeboten werden. Die Daten können auch auf ein WLAN-Telephon oder einer Telekommunikationsanlage wiederhergestellt werden. Jede Plattform, die eine geeignete Software zur Verfügung stellt, wie zum Beispiel Palm-OS, Windows CE, oder eine plattformunabhängige Software, wie beispielsweise Java, unterstützt, kann bedient werden. Selbst ein handelsüblicher Personal-Computer und somit auch alle angeschlossene Systeme wie zum Beispiel WLAN, Bluetooth oder Infrarot sind ansteuerbar. Auch größere Systeme, also z.B. Server oder Mainframe-Systeme, sind bedienbar. Da der Konverter in beide Richtungen funktioniert, sind alle Ausgabe-Systeme auch gleichzeitig als Eingabe-Systeme nutzbar.

Bei der Identifizierung des Nutzers und der Abrechnung der Dienste über die Telephonrechnung muss beachtet werden, dass bei Prepaid-Karten keine Rechnung erstellt wird. In diesen Fällen wäre es erforderlich, dass erkannt wird, ob es sich um einen Prepaid-Kunden handelt. In diesem Fall müsste überprüft werden, ob der Kunde noch über genug Guthaben verfügt, um den Dienst zu nutzen. Andernfalls müsste ihm eine Mitteilung angezeigt werden, dass sein Guthaben nicht ausreicht.

Allerdings existieren unter Umständen auch gerätespezifische Daten, die sich auch mit einem Konverter nicht umwandeln lassen. Dies sind zum Beispiel Betreiberlogos oder Klingeltöne, die auf ein bestimmtes Gerät oder einen bestimmten Hersteller zugeschnitten sind. Diese werden zwar in der Datenbank eingelagert, können jedoch bei einem Wiederherstellen auf einen anderen Gerätetyp nicht wieder auf dem Endgerät verwendet werden. Für solche Daten können beispielsweise Platzhalterlösungen verwendet werden oder es wird dem Nutzer vorab kommuniziert, so dass dieser die zu sichernden Daten entsprechend in ihrem Umfang einschränken oder modifizieren kann.

Die konkrete Nutzung und Durchführung des Verfahrens wird nachfolgend für einige Beispiele dargestellt.
A. Ein Nutzer möchte Daten, die er kürzlich von seinem Palm gesichert hat, im Internet einsehen, kontrollieren und dann für sein Outlook als Datei herunterladen und auf seinen neuen Palm wiederherstellen. Hierfür geht er auf die Internetservice-Seite, die ihm von seinem Dienstleister angegeben wurde. Dort kann er sich unter der Rubrik "Backup-Service" in den Service einloggen. Er wird beim Einloggen nach seiner Kundennummer und seinem Passwort gefragt. Diese muss er eingeben um sich über eine SSL-Verbindung in den Service einzuloggen. Die Kundennummer und das Passwort werden von der Web-Applikation aufgenommen und anhand dieser Daten wird der richtige Datensatz aus der Datenbank gesucht. Diese Daten werden mit der Hilfe des Konverters in HTML-Tags umgewandelt und auf der Website dargestellt. Der Nutzer hat nun die Möglichkeit alle seine Daten und Adressbucheinträge durchzuschauen und eventuell Änderungen vorzunehmen, die umgehend in der Datenbank abgelegt werden. Nachdem er sich versichert hat, dass alle Daten aktuell und korrekt sind, kann er diese Daten in einer Datei für sein Outlook herunterladen. Hinter dem Link steht ein Script, das die Daten aus der Datenbank abruft, sie anhand des mILC-Konverters in Outlook-Tags umwandelt und in einer Datei zum Download bereitstellt.
   Parallel dazu hat er die Möglichkeit eine Wiederherstellung in Auftrag zu geben. Hierfür muss er eine Telephonnummer angeben, unter der das mobile Gerät erreichbar ist, sowie den Gerätetyp. In diesem Fall gibt er den Gerätetyp Palm-OS und die Software-Version 3.5 an. Er bestätigt die Eingaben. Daraufhin sendet der Dienstleister eine Anfrage an das mobile Gerät. Auf dem Display des neuen Palms erscheint nach der Anrufannahme eine Sicherheitsabfrage, die noch einmal der Eingabe der Kundennummer und des Passwortes bedarf. Gibt er diese richtig ein, werden alle angegebene Daten aus der Datenbank abgerufen, anhand des mILC-Konverters in Palm-Tags der Version 3.5 umgewandelt und anhand der bestehenden GSM- oder GPRS-Verbindung übertragen. Nach der erfolgreichen Übertragung wird der Nutzer auf dem Palm-Display über eventuelle Fehler benachrichtigt. Nun ist die Wiederherstellung vollzogen.
B. Ein anderer Nutzer möchte seine Daten von seinem WLAN-Telephon sichern. Eine geeignete Software wurde vom Hersteller schon vorgesehen und implementiert. Er ist noch kein Kunde des Dienstleisters.
   Der Nutzer sucht in seinem WLAN-Telephon den entsprechenden Menüpunkt, der eine Sicherung erlaubt. Unter diesem Menüpunkt kann er die den Dienstleister betreffenden Einstellungen einsehen und ändern. Er wählt die Möglichkeit der Sicherung aller Daten. Daraufhin etabliert das Telephon eine Kommunikationsverbindung mit dem Dienstleister, der in den Einstellungen angegeben wurde. Hier kann er auch angeben ob er bereits Kunde ist, und somit eine Kundennummer hat, oder ob er Neukunde ist. Der Dienstleister registriert die IP des WLAN-Telephons, Uhrzeit, Datum und den Gerätetyp des Nutzers und stellt eine Sicherheitsabfrage, ob die Sicherung nun durchgeführt werden soll. Der Nutzer beantwortet die Frage mit "Ja". Das Telephon beginnt nun die entsprechenden Daten an den Dienstleister über die bestehende Verbindung zu übertragen. Der Dienstleister empfängt die Daten, der Konverter wandelt die Daten in das mILC-Format um und speichert sie mit den vorher gewonnenen Informationen in der Datenbank ab. Die erfolgreiche Übertragung wird dem Auftraggeber durch eine Meldung auf dem Display bekannt gegeben. Anschließend wird dem Nutzer seine Kundennummer angezeigt und die Möglichkeit gegeben, ein Passwort zu wählen. Nun ist die Sicherung abgeschlossen und der Nutzer hat jederzeit die Möglichkeit seine Daten wiederherzustellen, auf jedem Gerät das er möchte.
C. Ein weiterer Nutzer möchte seine Daten von seinem Mobiltelephon sichern. Eine geeignete Software ist noch nicht vorhanden. Er ist noch kein Kunde des Dienstleisters.
   Dieser Endnutzer entschließt sich, ein Backup seines Adressbuches und seiner persönlichen Daten durchzuführen. Weder hat der Hersteller des Gerätes einen Menüpunkt in der Betriebssoftware, noch hat der Anbieter des Netzes eine Software für solch ein Backup vorgesehen.
   Der Nutzer informiert sich über die ihm verbleibenden Möglichkeiten. Mit Hilfe seines Wap-Browsers lädt er sich eine Java-Softwarelösung herunter und speichert diese auf dem Gerät. Er startet die Software und wird aufgefordert, sich bei dem Dienstleister des Angebotes zu registrieren. Dies geschieht über eine GSM-Verbindung. Die Software stellt via GSM eine Verbindung zum Dienstleister her und fordert den Nutzer auf, einige persönliche Daten anzugeben, um die Anmeldung abzuschließen. Nun ist der Nutzer angemeldet und kann über die bereitgestellten Dienstleistungen des Anbieters verfügen. Er kann innerhalb der Software angeben, welche persönlichen Daten er sichern möchte. Nachdem er dies getan hat, werden die Daten über die bestehende GSM-Verbindung an den Server des Anbieters gesendet. Dieser konvertiert unter der Berücksichtigung des Geräteherstellers und des Gerätetyps alle Daten in ein unabhängiges Format (mILC) und legt es in der zentralen Datenbank ab. Nun kann der User jederzeit und von überall aus seine Daten wiederherstellen. Die Abrechnung kann hier über die Telephonnummer und somit über die Endabrechnung des Anbieters erfolgen.
D. Ein vierter Nutzer möchte Daten von der Telephonanlage seiner Firma sichern. Eine geeignete Software ist noch nicht vorhanden. Er ist noch kein Kunde des Dienstleisters.

Der Endnutzer entschließt sich die Daten der Telephonanlage seiner Firma zu sichern, da auf Grund von Arbeiten am Stromnetz mit Stromausfällen gerechnet werden muss. Da eine lokale Sicherung nicht möglich ist, möchte er den Dienstleister mit der Sicherung beauftragen.

Hierfür lädt sich der Endnutzer von der Internetpräsenz des Anbieters eine geeignete Software für seine Telephonanlage herunter und speichert diese auf einer Diskette. Die Telephonanlage hat einen Datenzugang, um die Betriebssoftware zu aktualisieren. Über diesen Zugang wird die Software des Dienstleisters installiert. Mit dem Anschluss an den PC, mit dem die Anlage normalerweise verwaltet wird, kann nun der Zugriff auf die Anlage erfolgen. Der Nutzer wählt aus, was er sichern möchte. Mögliche Optionen sind zum Beispiel: Nummern, Rufnummernpläne, Rufumleitung, Konfigurationen, Gesprächsdaten und Gebührensätze.

Sind die entsprechenden Optionen gewählt, bestätigt der Nutzer die Auswahl. Nun stellt die Telephonanlage eine Verbindung über das Telephonnetz her und sendet die Daten an den Server des Anbieters. Hier werden sie wiederum in das mILC-Format umgewandelt, damit eine Wiederherstellung auch in andere Anlagen erfolgen kann. Nach dem fehlerfreien Übertragen wird die Telephonverbindung getrennt und der Nutzer erhält eine Mitteilung, dass alle Daten übertragen und gesichert wurden. Die Abrechnung kann hier über die Telephonrechnung als Mehrwert-Leistung erfolgen.

Die erfindungsgemässen Verfahren werden nachfolgend anhand von in der Zeichnung schematisch dargestellten Ausführungsbeispielen rein beispielhaft näher beschrieben bzw. erläutert. Im einzelnen zeigen
- Fig.1: eine schematische Darstellung der Kommunikationsverbindungen in einem erfindungsgemässen Datensicherungsverfahren;
- Fig.2: ein erstes Ausführungsbeispiel zur Initialisierung der Datensicherung;
- Fig.3: ein zweites Ausführungsbeispiel zur Initialisierung der Datensicherung;
- Fig.4: die Konvertierung und Datenhaltung von übermittelten nutzerspezifischen Kommunikationsdaten;
- Fig.5: die Rückkonvertierung und Bereitstellung von gespeicherten nutzerspezifischen Kommunikationsdaten und
- Fig.6: ein Ausführungsbeispiel zur Nutzung der Datensicherung bei einem Wechsel des Kommunikationsgerätes.

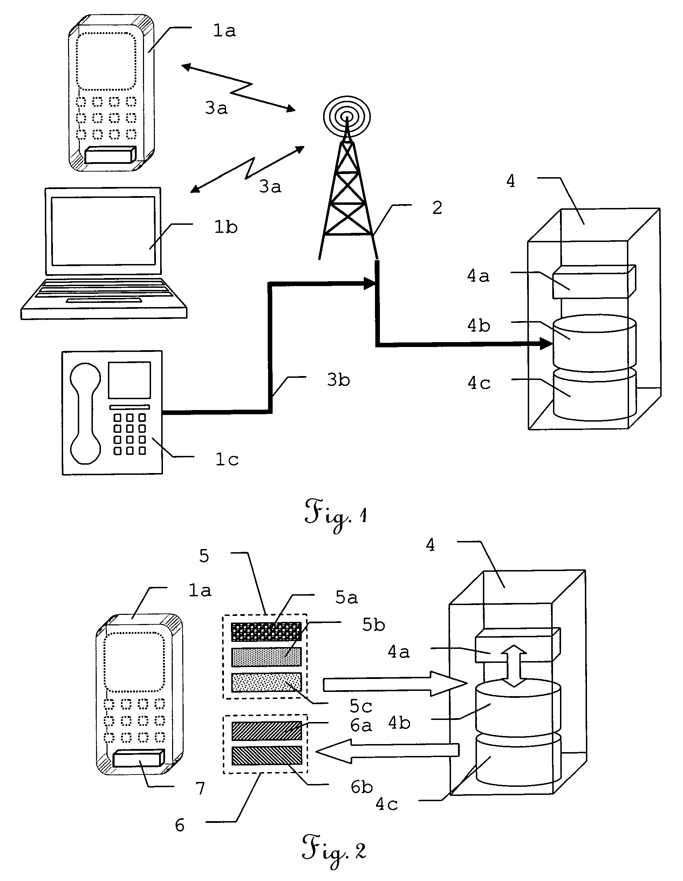

Fig.1 zeigt eine schematische Darstellung der Kommunikationsverbindungen in einem erfindungsgemässen Datensicherungsverfahren. Erfindungsgemäss wird eine Kommunikationsverbindung zwischen einem lokalen oder mobilen Kommunikationsgerät, wie z.B. einem Mobiltelephon 1a, einem über ein drahtloses lokales Netzwerk kontaktierter Rechner 1b oder einer drahtgebundenen Telephonanlage 1c, mit einem zentralen Speichereinheit 4 etabliert. Die Kommunikationsverbindung kann dabei zu einer Sende-/Empfangseinheit 2 über Funk 3a, andere drahtlose Verbindungen, wie z.B. optische Verbindungen, aber auch über eine physische Verbindung 3b erfolgen. Die zentrale Speichereinheit 4 weist mindestens eine Rechnerkomponente 4a sowie einen ersten Datenspeicher 4b und einen zweiten Datenspeicher 4c auf, wobei die Datenspeicher 4b und 4c jedoch auch physisch und/oder logisch integriert ausgebildet sein können.

Ein erstes Ausführungsbeispiel zur Initialisierung der Datensicherung im Rahmen des erfindungsgemässen Datensicherungsverfahrens wird in Fig.2 dargestellt. Nach dem Etablieren der Kommunikationsverbindung werden von einem Mobiltelephon 1a als Kommunikationsgerät technische Informationen 5 zur Identifikation einer Konfiguration des Kommunikationsgerätes an die zentrale Speichereinheit 4 übermittelt. Diese technische Informationen 5 beinhalten beispielsweise eine eindeutige Geräteidentifikation 5a, z.B. die Geräte- oder Seriennummer, Hardwaredaten 5b und Softwaredaten 5c, so dass die technischen Informationen 5 die Hard- und Software des Kommunikationsgerätes eindeutig identifizieren. Diese technische Informationen 5 werden in der zentralen Speichereinheit 4 in einem ersten Datenspeicher 4b abgelegt, wobei durch die Recheneinheit 4a eine Zugangsberechtigung 6, z.B. aus Nutzeridentifikation 6a und Zugangscode 6b, generiert und parallel an das Kommunikationsgerät übermittelt wird, wo eine Ablage dieser Zugangsberechtigung 6 in einem lokalen Speicher 7 erfolgt.

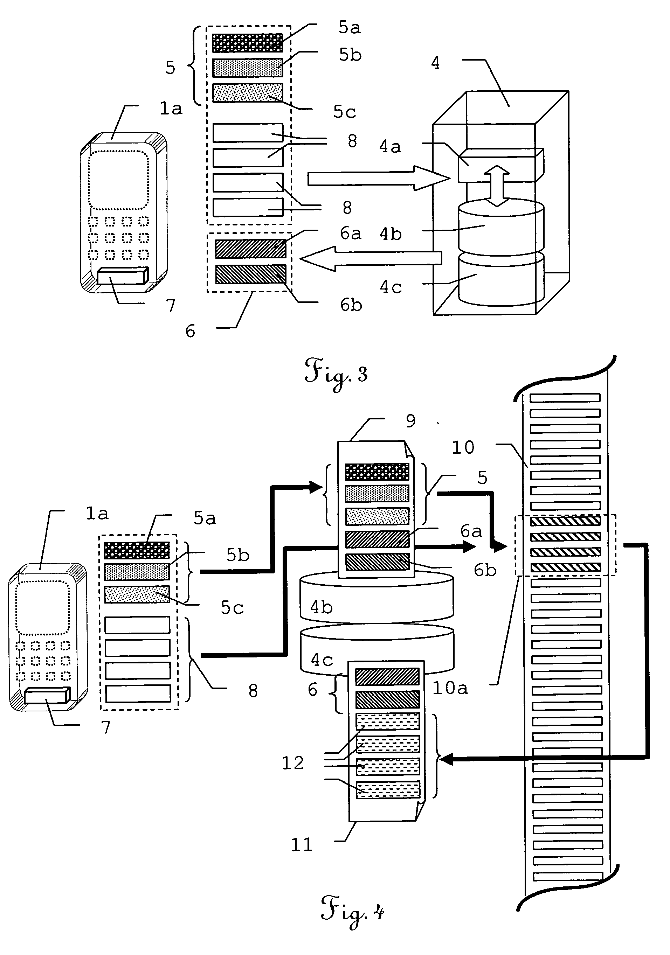

Fig.3 veranschaulicht ein zweites Ausführungsbeispiel zur Initialisierung der Datensicherung. In einer zum ersten Ausführungsbeispiel ähnlichen Konstellation wird eine Kommunikationsverbindung zum erstmaligen Übertragen von Daten etabliert. Nun sendet das Mobiltelephon 1a als Kommunikationsgerät technische Informationen 5 aus Geräteidentifikation 5a, Hardwaredaten 5b und Softwaredaten 5c zusammen mit nutzerspezifischen Kommunikationsdaten 8 and die zentrale Speichereinheit 4. Solche Kommunikationsdaten 8 sind beispielsweise Einträge, wie z.B. Telephonnummern, in einem Telephonregister des Nutzers, aber auch technische Hintergrunddaten zur Kommunikation, wie z.B. zum verwendeten Protokoll der anzuwählenden Kommunikationen oder zur Verhinderung von Kommunikation, z.B. gesperrte Adresse zur Unterdrückung von Werbesendungen oder -anrufen bzw. von Spamming.

Die nutzerspezifischen Kommunikationsdaten 8 stellen bereits eine zu übertragende und zu sichernde Auswahl aus der Gesamtmenge der in dem lokalen Speicher 7 verfügbaren Daten dar, so dass bei diesem erstmaligen Übertragen Auswahlkriterien der zukünftig zu übertragenden Kommunikationsdaten festgelegt und diese Auswahlkriterien gespeichert werden können. Analog zum ersten Ausführungsbeispiel wird ebenfalls eine Zugangsberechtigung 6, z.B. aus Nutzeridentifikation 6a und Zugangscode 6b, generiert und parallel an das Kommunikationsgerät übermittelt, wo die Zugangsberechtigung 6 im lokalen Speicher 7 abgelegt wird. Nuteridentifikation 6 und technische Information 5 werden in der zentralen Speichereinheit 4 in einem ersten Speicher 4b abgelegt. Die nutzerspezifischen Kommunikationsdaten 8 werden bereits bei diesem ersten Übertragen übermittelt und in einem zweiten Datenspeicher 4c gespeichert.

Vor dieser Speicherung im zweiten Datenspeicher 4c erfolgt eine Konvertierung der nutzerspezifischen Kommunikationsdaten 8 in ein Speicherformat 12, welche in Fig.4 verdeutlicht wird. Die übertragenen Kommunikationsdaten 8 werden zum Abspeichern aus dem Geräteformat in ein Speicherformat 12 konvertiert, wobei dieses Konvertieren für die technischen Parameter 5 spezifisch erfolgt. Hierbei wird das Speicherformat 12 durch eine Zuordnung in einem Datenformatregister 10 anhand der technischen Informationen 5 festgelegt. In dem Datenformatregister 10 werden die Datenformate 10a ermittelt, die den Hardwaredaten 5b und Softwaredaten 5c entsprechen, so dass die nutzerspezifischen Kommunikationsdaten 8 in ein nutzerunabhängiges Speicherformat 12 konvertiert und zusammen mit der Zugangsberechtigung 6 in Form eines Speicherdatensatzes 11 in den zweiten Datenspeicher 4c abgelegt werden können. Dabei erfolgt die Anordnung der Datenformate 10a im Datenformatregister 10 nicht notwendigerweise in Form einer Tabelle oder einer sequentiellen Anordnung. Gleichermassen eignen sich hierfür auch andere Formen der Datenhaltung, wie z.B. relationale oder objektorientierte Datenbanksysteme.

Das Konvertieren kann zeitsynchron während des Übertragens oder vorteilhaft auch zeitasynchron zum Übertragen durchgeführt werden. Nach dem erstmaligen Übertragen werden die nachfolgenden Übertragungen von Kommunikationsdaten zu Sicherungszwecken vorteilhafterweise automatisch ausgelöst, wofür sich insbesondere zeit- oder ereignisgesteuerte Auslösungen eignen. Dadurch wird eine Datensicherung im Hintergrund und ohne ständige Nutzerinteraktion ermöglicht.

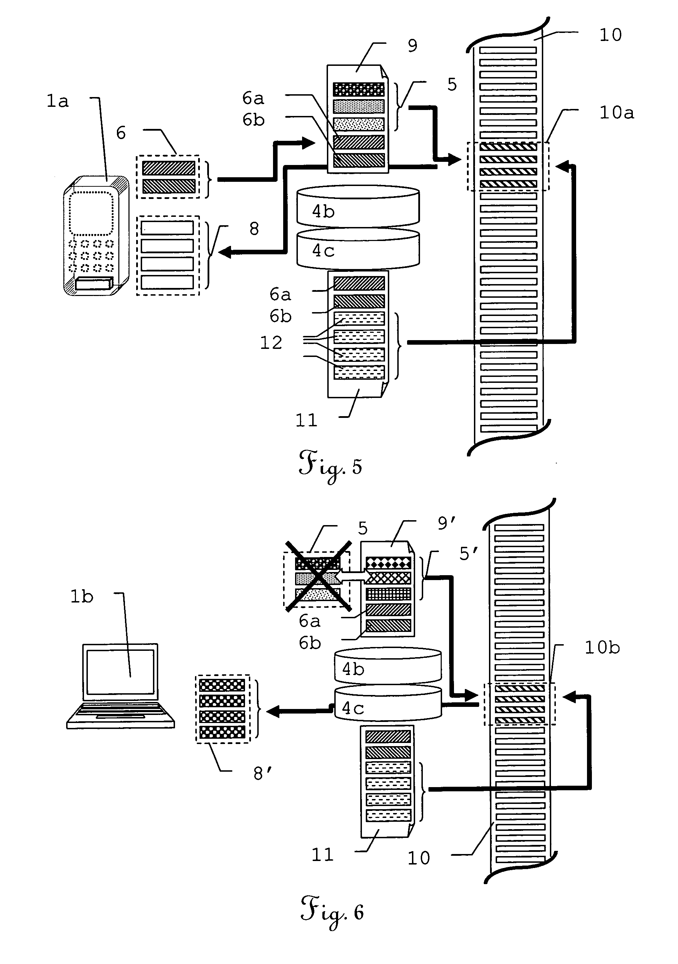

Fig.5 zeigt die Rückkonvertierung von im Speicherformat 12 abgelegten Daten und deren Bereitstellung als nutzerspezifische Kommunikationsdaten 8. Dabei wird grundsätzlich der in Fig.4 erläuterte Vorgang umgekehrt. Beim Rückkonvertieren wird das Geräteformat anhand einer über die technischen Informationen 5 verknüpften Zuordnung zu Datenformaten 10a im Datenformatregister 10 abgeleitet. Die Verknüpfung erfolgt beispielsweise über die Zugangsberechtigung aus Nutzeridentifikation 6a und/oder Zugangscode 6b, welche sowohl im Speicherdatensatz 11 als auch verknüpft mit den technischen Informationen 5 in einem Konversionsdatensatz 9 enthalten sind. In diesem Beispiel wird der Konversionsdatensatz 9 im ersten Datenspeicher 4b und der Speicherdatensatz 11 im zweiten Datenspeicher 4c abgelegt. Gleichermassen können jedoch erfindungsgemäss auch andere Verknüpfungen und Zuordnungen von Datenfeldern und/oder Dateninhalten zu Formaten gewählt werden. Ebenso kann die Speicherung auch in einer gemeinsamen physischen Einheit oder auch logisch einheitlich in einem einzigen Datenformat erfolgen.

In Kenntnis der relevanten Datenformate 10a werden die Kommunikationsdaten 8 aus dem Speicherformat 12 in das Geräteformat rückkonvertiert. Nach dem Rückkonvertieren kann eine Rückübertragung der Kommunikationsdaten 8 an das Mobiltelephon als Kommunikationsgerät 1a erfolgen, wo eine Ablegung im lokalen Speicher 7 als Ersatz oder Aktualisierung der dort gehaltenen Daten möglich ist.

Nach dem Rückkonvertieren muss jedoch nicht zwingend eine Rückübertragung auf das Kommunikationsgerät erfolgen, da über die Kommunikationsverbindung auch eine Änderung der Kommunikationsdaten 8 auf der zentralen Speichereinheit erfolgen kann. Nach der Änderung werden diese Kommunikationsdaten 8 wieder in das Speicherformat 12 konvertiert und abgelegt.

Ein Ausführungsbeispiel zur Nutzung der Datensicherung bei einem Wechsel des Kommunikationsgerätes wird in Fig.6 schematisch dargestellt. In diesem Beispiel soll statt des Mobiltelephons, für das in der Vergangenheit nutzerspezifische Kommunikationsdaten in einem geräteunabhängigen Speicherdatensatz 11 im zweiten Datenspeicher 4c der zentralen Speichereinheit abgelegt wurden, soll zukünftig ein tragbarer Rechner 1b als Kommunikationsgerät verwendet werden. Um diese Datenbasis auch weiterhin verwenden zu können, wird dem im Speicherdatensatz 11 abgelegten Kommunikationsdaten im Speicherformat ein weiteres oder ein alternatives Geräteformat zugeordnet, indem im Konversionsdatensatz 9' ein Austausch der bisherigen technischen Informationen 5 gegen die aktuellen technischen Informationen 5' des tragbaren Rechners 1b erfolgt. Die Verknüpfung zwischen dem unveränderten Speicherdatensatz 11 und dem angepassten Konversionsdatensatz 9' bleibt durch die in beiden Datensätzen enthaltenen Zugangsberechtigungen aus Nutzeridentifikation 6a und/oder Zugangscode 6b erhalten. Zur Rückkonversion und Bereitstellung der nun auf ein anderes Format transformierten nutzerspezifischen Kommunikationsdaten 8' werden anhand der aktuellen technischen Informationen 5' die neuen Datenformate 10b im Datenformatregister 10 abgeleitet, so dass eine Konversion in ein für das neue Kommunikationsgerät verwendbares Format stattfinden kann.

Trotz der gewählten systemspezifischen Beispiele ist das Verfahren grundsätzlich auch für andere Formen der Datenhaltung und Kommunikation erfindungsgemäss verwendbar. Insbesondere die Ausgestaltung der Datenformate und deren logische und physische Datenhaltung können vom Fachmann problemlos an verschiedene Systeme angepasst werden.

## Patentansprüche

1. Datensicherungsverfahren für ein, insbesondere mobiles, Kommunikationsgerät (1a-c),
mit wenigstens den Schritten
- Etablieren einer Kommunikationsverbindung zwischen Kommunikationsgerät (1a-c) und einer zentralen Speichereinheit (4),
- Übertragen nutzerspezifischer Kommunikationsdaten (8) in einem Geräteformat vom Kommunikationsgerät (1a-c) zur zentralen Speichereinheit (4),
- Abspeichern der Kommunikationsdaten (8) in der zentralen Speichereinheit (4),
**dadurch gekennzeichnet, dass**
beim Übertragen der Kommunikationsdaten (8) technische Informationen (5) zur Identifikation einer Konfiguration des Kommunikationsgerätes (1a-c) übermittelt werden und beim Abspeichern der Kommunikationsdaten (8) ein für die technischen Parameter (5) spezifisches Konvertieren der Kommunikationsdaten (8) aus dem Geräteformat in ein zentrales Speicherformat (12) erfolgt.

2. Datensicherungsverfahren nach Anspruch 1,
**dadurch gekennzeichnet, dass**
die technischen Informationen (5) die Hard- und Software des Kommunikationsgerätes (1a-c) eindeutig identifizieren.

3. Datensicherungsverfahren nach Anspruch 1 oder 2,
**dadurch gekennzeichnet, dass**
das Übertragen der Kommunikationsdaten (8) automatisch ausgelöst wird, insbesondere zeit- oder ereignisgesteuert.

4. Datensicherungsverfahren nach einem der vorangehenden Ansprüche,
**dadurch gekennzeichnet, dass**
beim erstmaligen Übertragen der Kommunikationsdaten (8) Auswahlkriterien der zu übertragenden Kommunikationsdaten (8) festgelegt und die Auswahlkriterien gespeichert werden.

5. Datensicherungsverfahren nach einem der vorangehenden Ansprüche,
**dadurch gekennzeichnet, dass**
beim erstmaligen Übertragen der Kommunikationsdaten (8) eine Nutzeridentifikation (6a) und ein Zugangscode (6b) erzeugt und zum Zugriff auf die Kommunikationsdaten (8) gespeichert wird.

6. Datensicherungsverfahren nach einem der vorangehenden Ansprüche,
**dadurch gekennzeichnet, dass**
beim Konvertieren eine Festlegung des Speicherformats (12) durch eine Zuordnung in einem Datenformatregister (10) anhand der technischen Informationen (5) erfolgt.

7. Datensicherungsverfahren nach einem der vorangehenden Ansprüche,
**dadurch gekennzeichnet, dass**
das Konvertieren zeitasynchron zum Übertragen erfolgt.

8. Datensicherungsverfahren nach einem der vorangehenden Ansprüche,
**dadurch gekennzeichnet, dass**
ein Rückkonvertieren der Kommunikationsdaten (8) aus dem Speicherformat (12) in das Geräteformat erfolgt.

9. Datensicherungsverfahren nach Anspruch 8,
**dadurch gekennzeichnet, dass**
beim Rückkonvertieren das Geräteformat anhand einer Zuordnung im Datenformatregister (10) und/oder der technischen Informationen (5) abgeleitet wird.

10. Datensicherungsverfahren nach Anspruch 8 oder 9,
**dadurch gekennzeichnet, dass**
nach dem Rückkonvertieren eine Rückübertragung der Kommunikationsdaten (8) an das Kommunikationsgerät (lac) erfolgt.

11. Datensicherungsverfahren nach Anspruch 8 oder 9,
**dadurch gekennzeichnet, dass**
nach dem Rückkonvertieren über die Kommunikationsverbindung eine Änderung der Kommunikationsdaten (8) auf der zentralen
Speichereinheit (4) erfolgt.

12. Datensicherungsverfahren nach einem der vorangehenden Ansprüche,
**dadurch gekennzeichnet, dass**
dem Speicherformat (12) ein weiteres oder ein alternatives Geräteformat zugeordnet wird.

13. Datenübertragungsverfahren von einem Kommunikationsgerät (1a-c) an eine zentrale Speichereinheit (4) zur Durchführung des Datensicherungsverfahrens nach einem der vorangehenden Ansprüche,
mit wenigstens den Schritten
- Etablieren einer Kommunikationsverbindung zwischen Kommunikationsgerät (1a-c) und zentraler Speichereinheit (4),
- Übertragen nutzerspezifischer Kommunikationsdaten (8) in einem Geräteformat,
**dadurch gekennzeichnet, dass**
beim Übertragen der Kommunikationsdaten (8) technische Informationen (5) zur Identifikation der Konfiguration des Kommunikationsgerätes (1a-c) übermittelt werden, insbesondere wobei die technische Informationen (5) die Hard- und Software des Kommunikationsgerätes (1a-c) eindeutig identifizieren.

14. Datenübertragungsverfahren nach Anspruch 13,
**dadurch gekennzeichnet, dass**
das Übertragen der Kommunikationsdaten (8) automatisch ausgelöst wird, insbesondere zeit- oder ereignisgesteuert.

15. Datenübertragungsverfahren nach Anspruch 13 oder 14,
**dadurch gekennzeichnet, dass**
bei dem erstmaligen Übertragen der Kommunikationsdaten (8) Auswahlkriterien der zu übertragenden Kommunikationsdaten (8) festgelegt und die Auswahlkriterien an die zentrale Speichereinheit (4) übertragen werden.

16. Datenhaltungsverfahren für eine zentrale Speichereinheit zur Durchführung des Datensicherungsverfahrens nach einem der Ansprüche 1 bis 12,
mit wenigstens den Schritten
- Etablieren einer Kommunikationsverbindung zwischen zentraler Speichereinheit (4) und, insbesondere mobilen, Kommunikationsgerät (1a-c),
- Empfangen nutzerspezifischer Kommunikationsdaten (8) im Geräteformat,
- Abspeichern der Kommunikationsdaten (8),
**dadurch gekennzeichnet, dass**
beim Empfangen der Kommunikationsdaten (8) technische Informationen (5) zur Identifikation einer Konfiguration des Kommunikationsgerätes (1a-c) aufgenommen werden und beim Abspeichern der Kommunikationsdaten (8) ein für die technischen Parameter (5) spezifisches Konvertieren der Kommunikationsdaten (8) aus dem Geräteformat in ein Speicherformat (12) erfolgt, insbesondere wobei die technischen Informationen (5) die Hard- und Software des Kommunikationsgerätes (1a-c) eindeutig identifizieren

17. Datenhaltungsverfahren nach Anspruch 16,
**dadurch gekennzeichnet, dass**
beim erstmaligen Empfangen der Kommunikationsdaten (8) eine Nutzeridentifikation (6a) und ein Zugangscode (6b) erzeugt und zum Zugriff auf die Kommunikationsdaten (8) gespeichert wird.

18. Datenhaltungsverfahren nach Anspruch 16 oder 17,
**dadurch gekennzeichnet, dass**
beim Konvertieren eine Festlegung des Speicherformats durch eine Zuordnung in einem Datenformatregister (10) anhand der technischen Informationen (5) erfolgt.

19. Datenhaltungsverfahren nach einem der Ansprüche 16 bis 18,
**dadurch gekennzeichnet, dass**
das Konvertieren zeitasynchron zum Empfangen erfolgt.

20. Datenhaltungsverfahren nach einem der Ansprüche 16 bis 19,
**dadurch gekennzeichnet, dass**
ein Rückkonvertieren der Kommunikationsdaten (8) aus dem Speicherformat (12) in das Geräteformat erfolgt.

21. Datenhaltungsverfahren nach Anspruch 20,
**dadurch gekennzeichnet, dass**
beim Rückkonvertieren das Geräteformat anhand einer Zuordnung im Datenformatregister (10) und/oder der technischen Informationen (5) abgeleitet wird.

22. Datenhaltungsverfahren nach Anspruch 20 oder 21,
**dadurch gekennzeichnet, dass**
nach dem Rückkonvertieren eine Rückübertragung der Kommunikationsdaten (8) an das Kommunikationsgerät (1a-c) erfolgt.

23. Datenhaltungsverfahren nach Anspruch 20 oder 21,
**dadurch gekennzeichnet, dass**
nach dem Rückkonvertieren über die Kommunikationsverbindung eine Änderung der Kommunikationsdaten (8) auf der zentralen Speichereinheit (4) erfolgt.

24. Datenhaltungsverfahren nach einem der Ansprüche 16 bis 23,
**dadurch gekennzeichnet, dass**
dem Speicherformat (12) ein weiteres oder ein alternatives Geräteformat zugeordnet wird.

25. Computerprogrammprodukt mit Programmcode, der auf einem maschinenlesbaren Träger gespeichert oder durch eine elektromagnetische Welle verkörpert ist, zur Durchführung eines der Verfahren nach einem der Ansprüche 1 bis 24, insbesondere wenn das Programm in einem Computer ausgeführt wird.

26. Datenstrukturprodukt zur Durchführung eines der Verfahren nach Anspruch 1 bis 24 als Folge von Datensätzen, welche technische Informationen (5), insbesondere eine Hardwareidentifikation (5b) und Softwareidentifikation (5c), sowie nutzerspezifischer Kommunikationsdaten (8), Nutzeridentifikation (6a) und Zugangscode (6b) aufweisen.
